# EUROPÄISCHE PATENTANMELDUNG

(11) **EP 2 287 241 A1**
(43) Veröffentlichungstag der Anmeldung: **23.02.2011**
(21) Anmeldenummer: 10172245.2
(22) Anmeldetag: 09.08.2010
(51) Int. Cl.: C08J 9/00, C08J 3/20, E04B 1/80, C08K 3/00, C08K 3/04, E04B 1/74

(54) **Dämmstoffe aus unterschiedlichen pigmentierten Partikeln**

(30) Priorität: 20.08.2009 EP 09168232
(71) Anmelder: BASF SE, 67056 Ludwigshafen (DE)
(72) Erfinder: Hahn, Klaus, 67281, Kirchheim (DE); Fischer, Jürgen, 67117, Limburgerhof (DE); Bellin, Ingo, 68159, Mannheim (DE)

(57) **Zusammenfassung**

Die Erfindung betrifft einen dämmenden geschäumten Werkstoff, der aus mindestens zwei verschiedenen Arten expandierbarer pigmententhaltender Styrolpolymerisatpartikel gebildet ist, wobei die Konzentration an Pigmenten in den beiden Arten unterschiedlich ist, hergestellt worden ist. Der erfindungsgemäße Werkstoff ist insbesondere in Plattenform vorteilhaft für die Wärmedämmung und dementsprechend für Isolationszwecke an Gebäuden oder auch für andere Applikationen geeignet. Außerdem kann mit dem erfindungsgemäßen Werkstoff auch eine verbesserte Schalldämmung erreicht werden.

## Beschreibung

Die Erfindung betrifft einen dämmenden geschäumten Werkstoff, der aus pigmentierten expandierbaren Styrolpolymerisatpartikeln hergestellt worden ist. Der erfindungsgemäße Werkstoff ist insbesondere in Plattenform vorteilhaft für die Wärmedämmung und dementsprechend für Isolationszwecke an Gebäuden oder auch für andere Applikationen geeignet. Außerdem kann mit dem erfindungsgemäßen Werkstoff auch eine verbesserte Schalldämmung erreicht werden.

Werkstoffe die aus expandierbaren Styrolpolymerisatpartikel gebildet werden, sind an sich nach dem Stand der Technik bekannt. Bei der Herstellung werden dabei expandierbare Partikel, die auch vorexpandiert sein können innerhalb von so genannten Dampfkammern aufgeschäumt, wobei zumindest eine weitere Expansion der Partikel auftritt. Gleichzeitig tritt eine Verschweißung und Verklebung der entsprechend aufgeschäumten Partikel miteinander auf. Nach einer Abkühlung kann ein so hergestellter Werkstoff aus der Dampfkammer entnommen werden.

Häufig erfolgt die Herstellung solcher Werkstoffe auch innerhalb von Formen, die in die Dampfkammern eingesetzt werden können, so dass auch eine bestimmte Formgebung eines Körpers, der aus einem solchen Werkstoff hergestellt worden ist, erreicht werden kann.

Es werden auch größere Blöcke aus solchen Werkstoffen hergestellt. Diese großformatigen Blöcke können nachfolgend in dünnere Platten zerschnitten werden.

Ein wesentliches Bewertungskriterium für solche Styropor-Werkstoffe ist die physikalische Dichte, wobei mit erhöhten physikalischen Dichten auch eine erhöhte mechanische Festigkeit erreichbar ist, was neben der Bruch-, Druck- auch die Zugfestigkeit betrifft.

Daneben spielt die Wärmeleitfähigkeit eines solchen Werkstoffes eine wesentliche Rolle. Da die Wärmeleitfähigkeit dichteabhängig ist, führt eine Erhöhung der physikalischen Dichte des Werkstoffes zu einer Erniedrigung der Wärmeleitfähigkeit.

Aus Gründen der Materialeinsparung ist es angestrebt, dass Werkstoffe, insbesondere Platten mit einer geringen Dichte hergestellt werden. Derartige Platten z. B. mit einer Dichte von 18 g/l weisen dann aber eine Wärmeleitfähigkeit auf, die nicht den Anforderungen der Wärmeleitklasse 032 (nach DIN 4108-4) entspricht. Eine Einordnung eines Werkstoffes in diese Wärmeleitklasse ist aber wünschenswert.

Es hat deshalb nicht an Versuchen gefehlt, hier durch Pigmentierung der expandierbaren Styrolpolymerisate eine Abhilfe zu schaffen. In der EP 0 981 574 B1 sind Graphitpartikel enthaltende expandierbare Styrolpolymerisate beschrieben. Diese Styrolpolymerisate die Graphitpartikel in einer homogenen Verteilung enthalten, zeigen dann, wenn hieraus Schaumstoffe hergestellt werden, eine gute Wärmeisolierung. Nach der Lehre der EP 0 981574 B1 weisen derartige Schaumstoffe bei einer Dichte von 10 g/l eine Wärmeleitfähigkeit auf, die unter 35 mW/m x K liegt. In der EP 1 783 161 sind zudem Dämmstoffe aus pigmententhaltenden und pigmentfreien Styrolpolymerisatpartikeln beschrieben.

Ausgehend hiervon ist es deshalb die Aufgabe der vorliegenden Erfindung, einen dämmenden geschäumten Werkstoff zur Verfügung zu stellen, der in seinen physikalischen Eigenschaften insbesondere in Bezug auf die Wärmeleitfähigkeit und der Dichte im Wesentlichen dem entspricht, wie er in der vorstehend erwähnten europäischen Patentschrift 0 981 574 B1 beschrieben ist, der aber andererseits unter thermischer Beanspruchung keine oder nur geringfügige Veränderungen in der Form aufweist. Dieses wird durch Dämmstoffe nach EP 1 783 161 erreicht, jedoch ist er nur möglich bei einer Dichte von mind. 20 g/l die Anforderungen der Wärmeleitklasse 032 (nach DIN 4108-4) zu erfüllen.

Erfindungsgemäß wird die Aufgabe mit einem dämmenden geschäumten Werkstoff der die Merkmale des Anspruches 1 aufweist, gelöst. Vorteilhafte Ausgestaltungen und Weiterbildungen der Erfindung können mit den in den untergeordneten Ansprüchen bezeichneten Merkmalen erreicht werden.

Erfindungsgemäß wird somit vorgeschlagen, dass der dämmende geschäumte Werkstoff aus mindestens zwei verschiedenen Arten expandierbarer pigmententhaltender Styrolpolymerisatpartikel gebildet ist, wobei die Konzentration an Pigmenten in den beiden Arten unterschiedlich ist. Überraschenderweise konnte die Anmelderin aufzeigen, dass ein Werkstoff und daraus hergestellte Schaumstoffplatten dann, wenn er pigmentierte Styrolpolymerisatpartikel unterschiedlicher Konzentration enthält, eine Wärmeleitfähigkeit, bei einer Rohdichte < 20 g/l, aufweist die der entspricht, wie sie bisher von den pigmentierten, insbesondere von den Graphit enthaltenden Schaumstoffplatten bekannt war, so dass die Anforderungen der Wärmeleitklasse 032 (nach DIN 4108-4) erfüllt sind. Gleichzeitig weisen aber die Werkstoffe die erfindungsgemäß aus den gemischten Styrolpolymerisatpartikeln aufgebaut sind, nahezu keine irreversiblen thermischen Formveränderungen auch unter längerer thermischer Beanspruchung, auf.

Der erfindungsgemäße Werkstoff weist dabei bevorzugt 10 bis 90 Gew.-% pigmentierte Styrolpolymerisatpartikel mit einem Pigmentgehalt von 3 - 8 Gew.-% und 90 bis 10 Gew.-% pigmentierte Styrolpolymerisatpartikel eines Pigmentgehalts von 0,1 - 1 Gew.-% auf. Besonders bevorzugt ist es, wenn der Werkstoff mindestens 30 Gew.-% pigmentierte Styrolpolymerisatpartikel mit einem Pigmentgehalt von 3 - 8 Gew.-% enthält. Besonders gute Ergebnisse werden dann erreicht, wenn ca. 50 Gew.-% pigmentierte Styrolpolymerisatpartikel mit einem Pigmentgehalt von 3 - 8 Gew.-% und 50 Gew.-% pigmentierte Styrolpolymerisatpartikel eines Pigmentgehalts von 0,1 - 1 Gew.-% im Werkstoff eingesetzt werden.

Aus stofflicher Sicht sind bei den Pigmenten der Styrolpolymerisatpartikel insbesondere Ruß, Metalloxide, Metallpulver, Farbstoffpigmente und/oder Graphit bevorzugt. Ganz besonders bevorzugt sind Pigment enthaltende Styrolpolymerisatpartikel wie sie in der EP 0981 574 B1 beschrieben sind.

Der erfindungsgemäße Werkstoff kann in Form von Platten oder Blöcken ausgebildet sein und dementsprechend für dämmende Einsatzzwecke eingesetzt werden. Ein besonders bevorzugter Einsatz ist die Wärmedämmung und hier insbesondere die Wärmedämmung an Gebäuden.

In einer vorteilhaften Ausführung der Erfindung ist es vorgesehen, dass die verschiedener Arten pigmentierten Styrolpolymerisatpartikel unregelmäßig im Werkstoff verteilt angeordnet sind. Es besteht aber auch die Möglichkeit, die pigmentierten Styrolpolymerisatpartikel in systematischer Form innerhalb des Werkstoffes anzuordnen.

Weiterhin besteht die Möglichkeit, da die pigmentierten Styrolpolymerisatpartikel mit hohem Pigmentgehalt im Gegensatz zu den Styrolpolymerisatpartikeln mit niedrigem Pigmentgehalt, meist stärker gefärbt sind, optisch erkennbare Muster in bestimmter Form im Werkstoff auszubilden, die beispielsweise den ästhetischen Gesamteindruck verbessern. Solche Muster können aber auch zur Übermittlung von Informationen genutzt werden.

In einer weiteren Alternative können bei einer systematischen Anordnung der pigmentierten Styrolpolymerisatpartikel mit hohem Pigmentgehalt in einer bestimmten Einfärbung auch Schichten gebildet werden, um eine lokale gezielte Beeinflussung der mechanischen und thermischen Eigenschaften des Werkstoffes erreichen zu können.

Eine solche Schicht kann beispielsweise mittig innerhalb eines plattenförmigen aus einem erfindungsgemäß hergestellten Werkstoff gebildeten Körpers angeordnet sein. Solche Schichten können auch Oberflächen analog wie Deckschichten, bilden. Selbstverständlich ist es auch möglich, dass auf derartige plattenförmigen Werkstoffen die wie vorstehend beschrieben, erfindungsgemäß aufgebaut sind, auch noch Haftvermittler für den weiteren Schichtaufbau aufgebracht sein.

Der erfindungsgemäße Werkstoff in Plattenform kann auch, da er u. a. auch für die Wärmedämmung vorgesehen ist, mit einer unterschiedlichen Kantenausbildung z. B. nach dem Nut-/Federprinzip versehen sein.

Überraschenderweise hat es sich nun gezeigt, dass der Werkstoff nach der Erfindung z. B. bei einer Rohdichte von ca. 18 g/l nicht nur die Wärmeleitfähigkeitsklasse 032 erfüllt, sondern dass dieser Werkstoff gleichzeitig keine oder nur unwesentliche Veränderungen auch unter einer längeren thermischen Beanspruchung aufweist. Der Werkstoff nach der vorliegenden Erfindung vereint somit die Vorteile des Werkstoffes, der EP 0 981 575 B1 mit den günstigen Eigenschaften in Bezug auf die thermischen Formveränderungen wie sie von pigmentfreien, d.h. von Styroporschaumstoffen bekannt oder aus EP 1 783 161 bekannt sind.

Durch die vorteilhaften thermischen und mechanischen Eigenschaften des erfindungsgemäßen geschäumten Werkstoffes wirken sich auch auftretende unterschiedliche Wärmeausdehnungen in reduzierter Form aus, so dass auch vermieden werden kann, dass in solchen Fugenbereichen Risse in solchen Beschichtungen oder Überzügen auftreten.

Nachfolgend wird die Erfindung mit Beispielen näher erläutert.

### Beispiel

Die in den Beispielen hergestellten Platten wurden unter gleichen Bedingungen unter Verwendung einheitlicher Verfahrensparameter und der gleichen Maschine hergestellt.

Ein erfindungsgemäßer Werkstoff wird aus vorexpandierten Polystyrolpolymerisatpartikeln enthaltend unterschiedlicher Konzentrationen an Grafit hergestellt. Diese Partikel können z.B. nach der Lehre von DE 103 58 786 A1 hergestellt werden.

### Vergleichsbeispiel 1

Vergleichsbeispiel 1 wurde nach EP 1 783 161 aus 80 Gew.-% Partikel mit einem Grafitgehalt von 3,5 Gew.-% (PI) und 20 Gew.-% pigmentfreien Partikeln (PII) hergestellt. Erst bei einer Dichte von 20,2 kg/m³ konnten die Anforderungen der WLG 032 erfüllt werden.

### Beispiel 1

Das erfindungsgemäße Beispiel 1 wurde aus 80 Gew.-% Partikel mit einem Grafitgehalt von 3,5 Gew.-% (PI) und 20 Gew.-% Partikel mit einem Grafitgehalt von 0,7 Gew.-% (PII) hergestellt. Die Anforderungen der WLG 032 konnten schon bei einer Dichte von 18,0 kg/m³ erfüllt werden.

### Vergleichsbeispiel 2

Vergleichsbeispiel 1 wurde nach EP 1 783 161 aus 80 Gew.-% Partikel mit einem Grafitgehalt von 4,0 Gew.-% (PI) und 20 Gew.-% pigmentfreien Partikeln (PII) hergestellt. Erst bei einer Dichte von 19,8 kg/m³ konnten die Anforderungen der WLG 032 erfüllt werden.

### Beispiel 2

Das erfindungsgemäße Beispiel 1 wurde aus 80 Gew.-% Partikel mit einem Grafitgehalt von 3,5 Gew.-% (PI) und 20 Gew.-% Partikel mit einem Grafitgehalt von 0,5 Gew.-% (PII) hergestellt. Die Anforderungen der WLG 032 konnten schon bei einer Dichte von 18,5 kg/m³ erfüllt werden.

**Tabelle 1:**

| Bei-spiel | Grafitge-halt PI [Gew%] | Anteil PI [Gew%] | Grafitge-halt P II [Gew%] | Anteil PII [Gew%] | Wärmeleit-fähigkeit¹ [mW/m*K] | Wärme-leitgrup-pe² | Dichte [kg/m³] |
|---|---|---|---|---|---|---|---|
| B1 | 3,5 | 80 | 0,7 | 20 | 30,5 | 032 | 18,0 |
| B2 | 3,5 | 80 | 0,5 | 20 | 30,6 | 032 | 18,5 |
| V1 | 3,5 | 80 | 0 | 20 | 30,6 | 032 | 20,2 |
| V2 | 4,0 | 80 | 0 | 20 | 30,6 | 032 | 19,8 |

| | | | | | | | |
|---|---|---|---|---|---|---|---|
| ¹ nach DIN 51612 ² nach DIN 4108-4 | | | | | | | |

Beispiel 1 zeigt, dass mit der erfindungsgemäßen Lösung die Anforderungen der WLG 032 bei einer gegenüber Vergleichsbeispiel V1 um ca. 2 kg/m³ geringeren Dichte erfüllt werden können, was einer Materialersparnis von ca. 10% entspricht.

Beispiel 2 zeigt, dass gegenüber Vergleichsbeispiel 2 bei insgesamt gleicher Graphitmenge die WLG 032 bei einer um ca. 1,3 kg/m³ geringeren Dichte erfüllt werden, was einer Materialersparnis von ca. 6% entspricht.

## Patentansprüche

1. Dämmender geschäumter Werkstoff der aus expandierbaren Styrolpolymerisatpartikel gebildet ist, **dadurch gekennzeichnet, dass** er aus mindestens zwei verschiedenen Arten pigmententhaltender Partikel mit unterschiedlichem Pigmentgehalt gebildet ist.

2. Dämmender geschäumter Werkstoff nach Anspruch 1, **dadurch gekennzeichnet, dass** er aus zwei verschiedenen Arten pigmententhaltender Partikel mit unterschiedlichem Pigmentgehalt gebildet ist.

3. Dämmender geschäumter Werkstoff nach Anspruch 2, **dadurch gekennzeichnet, dass** die eine Art pigmententhaltender Partikel einem Pigmentgehalt von 3 - 8 Gew.-% besitzt und die andere Art pigmententhaltender Partikel einem Pigmentgehalt von 0,1 -1 Gew.-% besitzt.

4. Werkstoff nach einem der vorhergehenden Ansprüche, **dadurch gekennzeichnet, dass** die Pigmente der pigmententhaltenden Styrolpolymerisatpartikel aus Ruß, Metalloxide, Metallpulver, Farbstoffpigmente und/oder Grafit ausgewählt sind.

5. Werkstoff nach Anspruch 4, **dadurch gekennzeichnet, dass** die Styrolpolymerisatpartikel Grafitpartikel in einer homogenen Verteilung enthalten.

6. Werkstoff nach einem der vorhergehenden Ansprüche, **dadurch gekennzeichnet, dass** er aus 10 bis 90 Gew.-% pigmentierte Styrolpolymerisatpartikel mit einem hohen Pigmentgehalt und 90 bis 10 Gew.-% pigmentierte Styrolpolymerisatpartikel mit einem niedrigen Pigmentgehalt gebildet ist.

7. Werkstoff nach Anspruch 6, **dadurch gekennzeichnet, dass** er aus mindestens 30 Gew.-% pigmentierter Styrolpolymerisatpartikel mit einem hohen Pigmentgehalt gebildet ist.

8. Werkstoff nach mindestens einem der Ansprüche 1 bis 7, **dadurch gekennzeichnet, dass** die pigmentierten Styrolpolymerisatpartikel mit dem höchsten Pigmentgehalt unregelmäßig im Werkstoff angeordnet sind.

9. Werkstoff nach mindestens einem der Ansprüche 1 bis 7, **dadurch gekennzeichnet, dass** die pigmentierten Styrolpolymerisatpartikel mit dem höchsten Pigmentgehalt systematisch im Werkstoff angeordnet sind.

10. Werkstoff nach mindestens einem der Ansprüche 1 bis 7, **dadurch gekennzeichnet, dass** die pigmentierten Styrolpolymerisatpartikel mit dem höchsten Pigmentgehalt ein Muster bildend, angeordnet sind.

11. Werkstoff nach mindestens einem der Ansprüche 1 bis 7, **dadurch gekennzeichnet, dass** die pigmentierten Styrolpolymerisatpartikel mit dem höchsten Pigmentgehalt eine Schicht bilden.

12. Werkstoff nach mindestens einem der vorhergehenden Ansprüche, **dadurch gekennzeichnet, dass** seine Wärmeleitfähigkeit soweit erniedrigt ist, dass sie den Anforderungen der Wärmeleitgruppe 032 (nach DIN 4108-4) genügt.

13. Verwendung des Werkstoffs nach mindestens einem der Ansprüche 1 bis 12, zur Wärmedämmung von Gebäuden und Gebäudeteilen.
